(19) **Europäisches Patentamt / European Patent Office / Office européen des brevets**

(11) **EP 4 406 735 A1**

(12) # EUROPEAN PATENT APPLICATION
published in accordance with Art. 153(4) EPC

(43) Date of publication:
**31.07.2024 Bulletin 2024/31**

(21) Application number: **22872580.0**

(22) Date of filing: **09.08.2022**

(51) International Patent Classification (IPC):
**B32B 5/26** *(2006.01)*   **D06M 17/00** *(2006.01)*

(52) Cooperative Patent Classification (CPC):
**B32B 5/26; D06M 17/00**

(86) International application number:
**PCT/JP2022/030364**

(87) International publication number:
**WO 2023/047824 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2021 JP 2021155228**

(71) Applicant: **Toray Industries, Inc.**
**Tokyo 103-8666 (JP)**

(72) Inventors:
• **MUSHA, Tetsuya**
  **Osaka-shi, Osaka 530-8222 (JP)**
• **HARUTA, Masaru**
  **Otsu-shi, Shiga 520-2141 (JP)**
• **KANEKO, Yuki**
  **Osaka-shi, Osaka 530-8222 (JP)**

(74) Representative: **Mewburn Ellis LLP**
**Aurora Building**
**Counterslip**
**Bristol BS1 6BX (GB)**

(54) **FIBER LAMINATED STRUCTURE AND PRODUCTION METHOD THEREFOR**

(57)   An object of the present invention is to provide a fiber laminated structure that has a waterproof breathable function, has stable waterproofness even when being stretched, has high peel strength, and is superior in durability. The present invention is a water-repellent fiber laminated structure in which a nonwoven fabric web with a bulkiness of 1.5 to 2.5 cm$^3$/g and a thickness of 20 to 60 um including a fiber made of a polyurethane-based polymer having a fiber diameter of less than 1 um is present on one side of a woven cloth having stretchability at least in either a warp direction or a weft direction with an adhesive agent A interposed therebetween.

EP 4 406 735 A1

**Description**

TECHNICAL FIELD

The present invention relates to a fiber laminated structure having high breathability and waterproofness and being superior in stretchability.

BACKGROUND ART

Conventionally, in order to obtain a fiber laminated structure superior in breathability and waterproofness, there have been employed so-called polyurethane wet coating in which polyurethane is dissolved using a dimethylformamide solvent and laminated to a woven cloth by coating or the like, then introduced into water to solidify, and then made into a porous film, and thereby a film having both breathability and waterproofness (Patent Document 1), a method of laminating a resin film prepared by blending a highly breathable hydrophilic resin using a polymer having a polymer chain having a hydrophilic moiety introduced thereinto to a woven or knitted fabric (Patent Document 2), and a method of bonding a stretched, expanded microporous polytetrafluoroethylene film to a woven cloth (Patent Document 3).

However, these are all fiber laminated structures using a resin film, and because of the use of the resin film, the film surface has a high degree of plastic-like touch without a natural feel, and the fiber laminated structures including a woven cloth laminated has a firm texture and a highly rough and hard feel.

In order to improve these defects, studies have been conducted on laminating a nonwoven fabric web as a waterproof breathable functional layer on a woven or knitted fabric. Specifically, a method of bonding a nonwoven fabric web containing fine fiber voids, composed of nanofibers having a fiber diameter of 1 um or less, and prepared by an electrospinning method or the like as a waterproof breathable functional layer to a woven cloth with an adhesive agent (Patent Document 4).

In this method, however, a woven cloth free from stretchability is used, and the fiber laminated structure including the waterproof breathable functional layer is not stretchable as a whole.

In addition, when the microporous film or the nonwoven fabric web containing fine fiber voids is stretched due to motions at the time of wearing, micropores or fine fiber voids are expanded, so that the waterproofness is made unstable and cannot be controlled.

PRIOR ART DOCUMENT

PATENT DOCUMENTS

Patent Document 1: Japanese Patent Laid-open Publication No. S56-26076
Patent Document 2: Japanese Patent Laid-open Publication No. H07-9631
Patent Document 3: Japanese Examined Patent Publication No. S51-18991
Patent Document 4: Japanese Patent Laid-open Publication No. 2010-30289

SUMMARY OF THE INVENTION

PROBLEMS TO BE SOLVED BY THE INVENTION

An object of the present invention is to solve the above-described problems and provide a fiber laminated structure having a waterproof breathable function, having stable waterproofness even when being stretched, having high peel strength, and being superior in durability by laminating a nonwoven fabric web composed of a polyurethane-based polymer having a fiber diameter of less than 1 um on one side of a stretchable woven cloth.

SOLUTIONS TO THE PROBLEMS

In order to solve the above-described problems, the present invention has the following configuration.

(1) A water-repellent fiber laminated structure in which a nonwoven fabric web with a bulkiness of 1.5 to 2.5 cm$^3$/g and a thickness of 20 to 60 um including a fiber made of a polyurethane-based polymer having a fiber diameter of less than 1 um is present on one side of a woven cloth having stretchability at least in either a warp direction or a weft direction with an adhesive agent A interposed therebetween.

(2) The fiber laminated structure according to (1), in which an elongation rate of the fiber laminated structure is 5% or more.

(3) The fiber laminated structure according to (1) or (2), in which the nonwoven fabric web is a composite laminated web formed of a laminate including three or more layers.

(4) The fiber laminated structure according to any one of (1) to (3), in which the adhesive agent A is infiltrated into the nonwoven fabric web by 10% or more and 90% or less in the thickness direction of the nonwoven fabric web, and a peel strength between the woven cloth and the nonwoven fabric web is 120 cN/cm or more.

(5) The fiber laminated structure according to any one of (1) to (4), in which the fiber laminated structure has a water resistance in accordance with the hydrostatic pressure method of JIS L 1092-1998 of 80 kPa or more.

(6) The fiber laminated structure according to any one of (1) to (5), in which the fiber laminated structure has a breathability in accordance with JIS L 1099-1998 A-1 method of 8000 g/m$^2$·24 hours or more.

(7) The fiber laminated structure according to any one of (1) to (6), in which a total fineness of fibers used in the woven cloth is 65 dtex or less, and a cover factor of the woven cloth is 2100 or less.

·

$$CF = \{(D1)^{1/2} \times M\} + \{(D2)^{1/2} \times N\}$$

where CF: cover factor,

D1: fineness (dtex) of warp yarn,
M: warp yarn density (yarns/2.54 cm),
D2: fineness (dtex) of weft yarn,
N: weft yarn density (yarns/2.54 cm)

(8) The fiber laminated structure according to any one of (1) to (7), in which the adhesive agent A is present in a dotted, linear, or lattice form at a ratio of 70% or less in terms of an adhesive agent application area on a surface of the nonwoven fabric web.

(9) The fiber laminated structure according to any one of (1) to (8), in which the fiber laminated structure has a thickness of 0.30 mm or less.

(10) The fiber laminated structure according to any one of (1) to (9), in which the fiber laminated structure has a breathability in accordance with JIS L 1099-1998 B-1 method of 30,000 g/m$^2$·24 hours or more.

(11) The fiber laminated structure according to any one of (1) to (10), further including a backing having stretchability in either or both of the warp direction and the weft direction on a surface of the nonwoven fabric web opposite from the surface in contact with the woven cloth, in which an adhesive agent B is present between the nonwoven fabric web and the backing.

(12) The fiber laminated structure according to (11), in which the adhesive agent B is present in a dotted, linear, or lattice form, and infiltrated into the nonwoven fabric web by 10% or more in the thickness direction of the nonwoven fabric web.

(13) The fiber laminated structure according to (1) or (2), further including a resin layer or a non-porous film resin layer on a surface of the nonwoven fabric web opposite from the surface in contact with the woven cloth.

(14) A method for producing a fiber laminated structure, including bonding a woven cloth having stretchability at least in either a warp direction or a weft direction to a nonwoven fabric web with a bulkiness of 1.5 to 2.5 cm$^3$/g and a thickness of 20 to 60 um including a polyurethane-based polymer having a fiber diameter of less than 1 um with an adhesive agent A, and then subjecting the bonded body to water repellent finishing.

(15) The method for producing a fiber laminated structure according to (14), in which the adhesive agent A is a hot melt resin or a solvent-based adhesive agent, and a method of applying the adhesive agent A to a surface of the nonwoven fabric web or to the woven cloth is a gravure coating method.

EFFECTS OF THE INVENTION

In accordance with the present invention, a laminated structure that can maintain superior breathability and waterproofness and is superior in durability of these properties can be provided by laminating a nonwoven fabric web composed of a polyurethane-based polymer having a fiber diameter of less than 1 um on one side of a woven cloth having stretchability.

EMBODIMENTS OF THE INVENTION

Hereinafter, the present invention will be described in detail.

The fiber laminated structure of the present invention is a structure in which at least a nonwoven fabric web composed of fibers having a diameter of less than 1 um is laminated on one side of a woven cloth with an adhesive agent (hereinafter, the adhesive agent for bonding the woven cloth to the nonwoven fabric web may be referred to as an "adhesive agent A") interposed therebetween.

The woven cloth has stretchability in at least either the warp direction or the weft direction. Owing to having stretchability, the woven cloth exhibits stretchability together with the nonwoven fabric web to be laminated. Although the woven cloth is not particularly limited as long as it has stretchability, for example, the woven cloth preferably has an elongation rate in accordance with the JIS L 1096 B method (2010 version) of 3% or more, more preferably 5% or more, and still more preferably 10% or more. The fiber laminated structure preferably has an elongation rate in accordance with the JIS L 1096 B method (2010 version) of 5% or more. The woven cloth is preferably as high in stretchability as possible, but the elongation rate of the woven cloth is preferably 50% or less because the water resistance is deteriorated when the woven cloth is made into a fiber laminated structure.

In order to exhibit stretchability, it is preferable in the present invention to use, as a warp yarn and/or a weft yarn, a side-by-side latent crimp yarn obtained by combining two or more types of polyesters or nylons differing in shrinkage characteristics. A latent crimp yarn or a textured yarn prepared by subjecting a single type of synthetic fiber such as polyester fiber or nylon fiber to yarn processing such as false twisting or air processing can be used as a textured yarn. In particular, it is preferable to use a false-twisted yarn because it is moderately superior in stretchability. In the present invention, a woven cloth using these yarns is used as a woven cloth having stretchability.

In addition to such a stretchable yarn, common synthetic fibers such as polyester fibers such as polyethylene terephthalate and polytrimethylene terephthalate, and polyamide fibers such as nylon 6 and nylon 66, semisynthetic fibers such as acetate fibers, and natural fibers such as cotton, hemp, and wool can be used singly, or two or more of them can be mixed and used. Among them, continuous fibers of synthetic fibers such as polyester fibers and nylon fibers, which have high durability against water repellent finishing and are easily subjected to water repellent finishing, are preferable.

The sectional shape of the fiber is not particularly limited, and a wide variety of fibers having a circular shape, a triangular shape, a hollow shape, or the like can be used. Furthermore, an additive that imparts antistatic properties and the like and a matting agent such as titanium oxide may be contained in the yarn.

The total fineness of yarns used in the woven cloth is preferably 65 dtex or less. This is to reduce the thickness of the woven cloth and increase the breathability. If the yarns are excessively thin, tear strength is lowered, and therefore the total fineness is preferably 11 dtex or more.

The form of the woven cloth is not particularly limited, and such woven cloths as plain, twill, satin, and rip structures, double structures, oxford, and tussah are preferable.

In the present invention, the cover factor of the woven cloth is preferably 2100 or less, more preferably 2000 or less, and still more preferably 1900 or less.

Since the breathability in accordance with JIS L 1099 (B-1 method) is higher as the cover factor is smaller, it is more preferable as the cover factor is smaller from the viewpoint of breathability. On the other hand, since the woven cloth is usually an outer fabric, the woven cloth also plays a role of protecting the nonwoven fabric web. When the cover factor is excessively small, gaps between weaving yarns are large, the nonwoven fabric web is exposed and is damaged by friction or the like, so that the waterproofness is deteriorated. In addition, in consideration of the aesthetics and the like of the outer fabric, the cover factor is preferably 1400 or more.

The cover factor is expressed by the following equation.

$$CF = \{(D1)^{1/2} \times M\} + \{(D2)^{1/2} \times N\}$$

where CF: cover factor,

    D1: fineness (dtex) of warp yarn,
    M: warp yarn density (yarns/2.54 cm),
    D2: fineness (dtex) of weft yarn,
    N: weft yarn density (yarns/2.54 cm).

The fiber laminated structure of the present invention including the woven cloth and the nonwoven fabric web described later has water repellency. The water repellency is preferably grade 2 or higher, more preferably grade 3 or higher in the water repellency test (spray method) in accordance with JIS L 1092. The water repellency is preferably obtained by performing water repellent finishing. This is because a high water resistance can be obtained by performing the water repellent finishing.

Furthermore, processing as necessary such as antistatic processing, antibacterial processing, ultraviolet absorption processing, or near infrared absorption processing may be performed.

The nonwoven fabric web of the present invention is composed of fibers made of a polyurethane-based polymer having a fiber diameter of less than 1 um. The term "fiber having a fiber diameter of less than 1 $\mu$m" means that the single fiber has a diameter of less than 1 um. If the diameter of the single fiber is 1 um or more, large gaps are formed between fibers, so that the water resistance decreases or the texture is roughened or hardened. The fiber diameter is still more preferably 700 nm or less. However, when the diameter is less than 5 nm, it is difficult to control spinning and the production cost tends to increase, and therefore the diameter is preferably 5 nm or more. It is preferable that all the fibers constituting the nonwoven fabric web have a fiber diameter in the above range, but fibers having a fiber diameter out of the above range may be contained as long as the effect of the present invention is not impaired. As the fiber diameter of the present invention, a value measured by the method described in EXAMPLES is used.

The above-described ultrafine fibers having a diameter of less than 1 um are obtained by an electrospinning method, a flash spinning method, a composite spinning method or the like, and the obtained fibers are aligned in a sheet form to afford a nonwoven fabric web. In particular, the electrospinning method can be suitably used because it is easy to control ultrafine fibers and a nonwoven fabric web can be easily obtained.

In the electrospinning method, polyurethane is used in the present invention, and for example, a nonwoven fabric web comprising ultrafine fibers can be obtained by a solution method using dimethylformamide as a solvent.

The nonwoven fabric web has a thickness of 20 to 60 $\mu$m. The thickness is preferably 20 to 40 $\mu$m. If the thickness is less than 20 $\mu$m, the water resistance is lowered, and if the thickness is more than 60 $\mu$m, the breathability or the air permeability is lowered and the texture may be roughened and hardened after the nonwoven fabric web is bonded and laminated to the woven cloth. Also when the nonwoven fabric web is a composite laminated web, the thickness is in the above range.

In the present invention, the bulkiness of the nonwoven fabric web is set to 1.5 to 2.5 $cm^3$/g. Setting the bulkiness of the nonwoven fabric web within this range makes it easy to obtain the waterproof breathable performance described below. If the bulkiness is excessively small, the breathability is reduced, and the texture is roughened or hardened. In addition, when the bulkiness is excessively increased, the water resistance is lowered, so that a desired waterproofness cannot be obtained.

The bulkiness is calculated from the basis weight and the thickness as expressed by the following equation.

- 

$$\texttt{Bulkiness = (t/w) × 1000}$$

where bulkiness: $cm^3$/g
basis weight w: $g/m^2$
sample thickness t: mm.

When the nonwoven fabric web of the present invention is stretched, the thickness thereof decreases, and at the same time the ultrafine fibers constituting the nonwoven fabric web are thinned due to the stretching, so that the porosity of the nonwoven fabric web increases and the water resistance decreases. Therefore, by designing the thickness and the bulkiness within the above-described ranges, it is possible to control the water resistance at the time of stretching. Regarding the water resistance at the time of stretching, it can be considered that water does not flow unless water pressure corresponding to a pressure loss is applied to voids in the nonwoven fabric web. Accordingly, the water resistance at the time of stretching can be calculated using the following Fanning's equation representing the pressure loss of a fluid flowing in a pipe.

- 

$$\texttt{Water resistance = Δp × t}$$

where the pressure loss per 1 um of the thickness of the film $\Delta$p: kPa/$\mu$g
film thickness t: mm.

The nonwoven fabric web of the present invention is preferably a composite laminated web including three or more layers. The number of the layers is preferably 3 to 6, and more preferably 4 to 5. Thanks to the composite lamination, pinhole positions are dispersed and the nonwoven fabric webs laminated complement each other, so that defects due to the pinholes are reduced and a decrease in water resistance can be controlled.

As to the water resistance of the fiber laminated structure of the present invention, the water resistance measured by the hydrostatic pressure method in accordance with JIS L 1092-1998 is preferably 80 kPa or more. The water resistance is more preferably 90 kPa, and still more preferably 100 kPa. When the water resistance of the fiber laminated structure is 80 kPa or more, the waterproof breathable performance is improved.

In the present invention, the nonwoven fabric web composed of the ultrafine fibers and the woven cloth are laminated and bonded with an adhesive agent A interposed therebetween. At this time, it is preferable that the adhesive agent A is infiltrated into the nonwoven fabric web by 10% or more in the thickness direction of the nonwoven fabric web. By bonding the nonwoven fabric web to the woven cloth in this manner, the peel strength between the nonwoven fabric web and the woven cloth can be easily adjusted to 120 cN/cm or more. As a result, the tensile strengths in the warp and the weft directions as the laminated structure depend on the tensile strength of the woven cloth, and these are practically preferable. Since the nonwoven fabric web using the polyurethane fiber has a large stretch ratio in both the warp and the weft directions, the nonwoven fabric web can follow the elongation of various woven cloths, and the tensile strength after the bonding is suitable when the bonded product is used as clothes.

The infiltration (hereinafter, this may be referred to as "infiltration rate") of the adhesive agent A in the thickness direction of the nonwoven fabric web is preferably 90% or less. When the infiltration rate is 90% or less, the adhesive agent A hardly strikes through the nonwoven fabric web and hardly is emitted from a surface of the nonwoven fabric web, that is, hardly is exposed on the rear surface of the fiber laminated structure, the appearance is good, and the contact with an intermediate garment or the skin is smooth. The infiltration rate is more preferably in the range of 40 to 90%, and still more preferably in the range of 50 to 90%. Within this range, stable peel strength and good apparent quality can be obtained.

In the present invention, the thickness of the nonwoven fabric web and the degree of infiltration of the adhesive agent in the thickness direction are measured using a photograph taken with a scanning electron microscope. Specifically, the fiber laminated structure is cut in the thickness direction along each of the warp, weft, and bias directions at an arbitrary location, and photographed such that the entire nonwoven fabric web in the thickness direction is captured. Thereafter, in each of the sectional photographs along the warp, weft, and bias directions, the thickness of the nonwoven fabric web and the infiltration thickness of the adhesive agent are measured at five places. The average value of the 15 measurements in total is defined as the thickness of the nonwoven fabric web or the infiltration thickness of the adhesive agent. The infiltration rate is calculated using the following formula.

- 

Infiltration rate (%) = {infiltration thickness of adhesive agent ($\mu$m) / thickness of nonwoven fabric web ($\mu$m)} $\times$ 100.

As described above, by infiltrating the adhesive agent A into the nonwoven fabric web by 10% or more in the thickness direction of the nonwoven fabric web, it is possible to adjust the peel strength between the nonwoven fabric web and the woven cloth to 120 cN/cm or more. The peel strength is preferably as high as possible from the viewpoint of durability, but is preferably 800 cN/cm or less because a technique for enhancing the peel strength generally leads to texture hardening.

In the present invention, it is preferable that the adhesive agent A interposed between the woven cloth and the nonwoven fabric web is in a dotted form with an area of 0.1 to 100.0 mm$^2$ with respect to the plane direction. The larger the area is, the higher the peel strength is but the rougher or harder the texture is, and therefore, the area is preferably 0.5 to 50.0 mm$^2$, and more preferably the adhesive agent A is in a dotted form with an area of 1.0 to 25.0 mm$^2$. In addition, the adhesive agent A may be linear form in the plane direction, and is preferably linear or lattice form with a line thickness of 0.1 to 10.0 mm. Similarly to the above, the line thickness is more preferably 1.0 to 10.0 mm, and most preferably in the range of 1.0 to 5.0 mm. The "plane direction" means a plane direction of the fiber laminated structure. Therefore, the area and the thickness of the adhesive agent A referred to herein mean, for example, the area and the thickness of the adhesive agent A on a projection plane on the horizontal plane when the fiber laminated structure is arranged in the horizontal direction.

In addition, the adhesive agent A is preferably present at a ratio of 70% or less in terms of an adhesive agent application area on a surface of the nonwoven fabric web. The adhesive agent application area referred to in the present invention means an area ratio at which the adhesive agent is applied, and hereinafter may be simply referred to as "area ratio". In order to increase the accuracy of control of the peel strength and to stabilize the breathability or the air permeability and the water resistance of the fiber laminated structure at a high level, the adhesive agent A is preferably provided at an area ratio of 70% or less based on the area of the woven cloth to which an adhesive agent is applied in the plane direction. The area ratio is more preferably 10 to 70%, and still more preferably 30 to 70%.

In order to increase the breathability or the air permeability, it is preferable to reduce the area of the dots or lines of the adhesive agent A and reduce the area ratio of the adhesive agent A. However, if doing so, the peel strength or the water resistance are reduced. On the other hand, in order to enhance the peel strength and the water resistance, it is preferable to increase the area of the dots or lines of the adhesive agent A and increase the area ratio, and it is most preferable to form an adhesive layer on the entire area, but if doing so, the breathability or the air permeability decreases.

In order to properly maintain the opposite functionalities, it is preferable to apply the adhesive agent A in a dotted form with an area of 0.1 to 100.0 mm$^2$ or a linear or lattice form with a line thickness of 0.1 to 10.0 mm, at an area ratio of 10 to 70%.

The dotted form may be any form such as a circle, a quadrangle, a rhombus, an ellipse, or a triangle, and may be arranged with a combination to these forms to form a pattern or a character, or may be arranged in a logo mark of a trademark, or the like. In addition, the dots may be arranged to form a continuous pattern or may be arranged randomly. The linear shape may be either a straight line or a curved line. The area ratio is the coverage by the adhesive agent.

In the case of applying in a dotted form, when the application area of each dot of the adhesive agent A is 0.1 mm$^2$ or more, the adhesiveness is improved, and when the application area is 100.0 mm$^2$ or less, the size of the binding point of the woven cloth is reduced, so that the softness of the texture is maintained, and the breathability tends to be high. When the line thickness of the linear form and the lattice form is 0.1 mm or more, the adhesiveness is high, and when the line thickness is 10.0 mm or less, the size of the binding point of the woven cloth is reduced, so that the softness of the texture tends to be maintained. Furthermore, when the ratio of the area covered with the adhesive agent A is 10% or more, the adhesiveness is high, and when the area ratio is 70% or less, the number of binding points of the woven cloth is reduced, so that the softness of the texture tends to be maintained.

In the present invention, as described above, when a structure in which a pillar of the adhesive agent is partially formed in the nonwoven fabric web is formed, the nonwoven fabric web is hardly crushed even if a pressing load is applied to the nonwoven fabric web. When a pressing load is applied to a nonwoven fabric web in which no adhesive agent is used and has no pillar, voids disappear, and the nonwoven fabric web is compressed and is not restored, and comes into a so-called crushed state, and eventually the breathability or the air permeability tends to decrease.

In the present invention, the adhesive agent A is preferably a hot-melt adhesive agent containing no organic solvent. Examples of a resin having hot-melt adhesiveness include polyurethane-based resins, polyester-based resins, polyether-based resins, and polyamide-based resins, and polyurethane-based resins are preferable in consideration of adhesiveness, flexibility, texture, stretchability, and the like. In addition, a solvent-based adhesive agent can also be suitably used.

In the present invention, another embodiment may be a fiber laminated structure in which a nonwoven fabric web composed of fibers having a diameter of less than 1 um is laminated on at least one side of a woven cloth with an adhesive agent A interposed therebetween as described above, and a backing is laminated on a surface of the nonwoven fabric web opposite from the surface to which the woven cloth is bonded. That is, it is preferable that a nonwoven fabric web composed of fibers having a diameter of less than 1 um is laminated on at least one side of a woven cloth with an adhesive agent A interposed therebetween, a backing exposed to the back surface of the fiber laminated structure is further provided on a surface of the nonwoven fabric web opposite from the surface in contact with the woven cloth, and an adhesive agent B is provided between the nonwoven fabric web and the backing. The fiber laminated structure is preferably one in which the adhesive agent B is applied in a dotted form with an area of 0.1 to 100.0 mm$^2$ or a linear or lattice form with a line thickness of 0.1 to 10.0 mm (preferably 1.0 to 10.0 mm) with respect to the plane direction, applied at a ratio of 10 to 70% in terms of area ratio to the backing, and infiltrated into the nonwoven fabric web by 10% or more in the thickness direction of the nonwoven fabric web.

Owing to such a configuration, in addition to the effects of the basic configuration described above, the following effects can be obtained. That is, the fiber layer of the nonwoven fabric web is fixed by both the adhesive agent infiltrated from the outer surface (that is, the woven cloth side) and the adhesive agent infiltrated from the backing surface, so that peeling is further less likely to occur in the nonwoven fabric web layer, a peel strength of 120 cN/cm or more is more easily achieved, and crushing due to compression is also less likely to occur. In particular, by applying the adhesive agent B in an area ratio of 10 to 70% in a dotted form having an area of 0.1 to 100.0 mm$^2$ or in a linear or lattice form having a line thickness of 0.1 to 10.0 mm (preferably 1.0 to 10.0 mm), it is possible to increase the accuracy of control of the peel strength, and also possible to stabilize the breathability or the air permeability and the water resistance of the fiber laminated structure at a high level.

In such an embodiment, it is preferable to keep each of the area ratio of the adhesive agent A on the outer surface and the area ratio of the adhesive agent B on the backing surface at 10 to 70% for maintaining high breathability or high air permeability. However, for example, when the infiltration rates of the adhesive agents A and B are 100%, it may be difficult to enhance the breathability or the air permeability only by maintaining the area ratios of the adhesive agents A and B at 10 to 70%. That is, when the infiltration rate is 100%, the adhesive agent B from the backing surface is exposed on the outer surface, so that the area ratio is (area ratio of adhesive agent A) + (area ratio of adhesive agent B) - (area ratio of overlapping of adhesive agent A and adhesive agent B), and as a result, the area ratios of the adhesive agents A and B may exceed 70%. Therefore, it is preferable to maintain the high breathability or high air permeability by adjusting the relative positional relationship between the adhesive agent A and the adhesive agent B such that both the area ratio of the adhesive agent A and the area ratio of the adhesive agent B are maintained at 10 to 70% even when the infiltration rates of the adhesive agents A and B are 100%.

In the present invention, it is preferable that the backing has stretchability in at least either the longitudinal direction or the transverse direction, or in both of the two directions. Although the woven cloth is not particularly limited as long as it has stretchability, for example, the woven cloth preferably has an elongation rate in accordance with the JIS L 1096 B method (2010 version) of 3% or more, more preferably 5% or more, and still more preferably 10% or more.

As the backing, fabrics composed of chemical fibers such as polyester fiber, nylon fiber, acrylic fiber, acetate fiber, and polylactic acid fiber, natural fibers such as cotton, hemp, silk, and wool, or combined filament yarns or blended yarns thereof are suitably used. The backing may be in any form such as a woven cloth, a knitted fabric, or a nonwoven fabric, and a mixed woven fabric or a mixed knitted fabric of the fibers recited above is preferably used. The fabric to be used for the backing may be subjected to processing as necessary, such as water repellent finishing, antistatic processing, antibacterial processing, ultraviolet absorption processing, and near infrared absorption processing. When a sealing tape is used to maintain the waterproofness of a seam, a woven cloth, a nonwoven fabric web, a backing, and a sealing tape are laminated in this order, and the sealing tape is bonded to the backing with a molten resin. It is preferable to use a woven or knitted fabric having a low density for the backing so that the molten resin easily penetrates through the backing and reaches the nonwoven fabric web. A tricot is preferable from the viewpoint of being thin and coarse, nylon tricot, which has no problem of migration sublimation of disperse dyes, is preferable, and a tricot containing nylon 66, which has a high melting point, is most preferable because the molten resin of the sealing tape is melted and then bonded to the backing.

As the adhesive agent B, similarly to the adhesive agent A described above, a hot-melt adhesive agent containing no organic solvent is preferable. Examples of a resin having hot-melt adhesiveness include polyurethane-based resins, polyester-based resins, polyether-based resins, and polyamide-based resins, and polyurethane-based resins are preferable in consideration of adhesiveness, flexibility, texture, stretchability, and the like. In addition, a solvent-based adhesive agent can also be suitably used. As the adhesive agent B, one the same as the adhesive agent A may be chosen or one different from the adhesive agent A may be chosen.

Still another embodiment may be a fiber laminated structure in which a nonwoven fabric web composed of fibers having a diameter of less than 1 um is laminated on at least one surface of a woven cloth with an adhesive agent A interposed therebetween as described above, and a resin layer is provided on a surface of the nonwoven fabric web opposite from the surface to which the woven cloth is bonded. It is also preferable that a fiber laminated structure is formed in which a nonwoven fabric web composed of fibers having a diameter of less than 1 um is laminated on at least one surface of a woven cloth with an adhesive agent A interposed therebetween, a resin layer exposed at a height of, for example, about 3 to 30 um is further provided on a surface of the nonwoven fabric web opposite from the surface in contact with the woven cloth, that is, on a back surface of the fiber laminated structure, the resin layer is present in a dotted form with an area of 0.1 to 100.0 mm$^2$, or in a linear or lattice form with a line thickness of 0.1 to 10.0 mm (preferably 1.0 to 10.0 mm) with respect to the plane direction and is present at an area ratio of 10 to 70% based on the nonwoven fabric web, and the resin layer is infiltrated into the nonwoven fabric web by 10% or more in the thickness direction of the nonwoven fabric web. Owing to such a configuration, in addition to the effects of the basic configuration described above, the following effects can be obtained. That is, the backing side (resin layer side) forms point contact, so that dry and smooth contact feeling is obtained and the nonwoven fabric web is less prone to be scratched, leading to improvement in durability of waterproofness. In addition, since the adhesive agent A and the resin constituting the resin layer are infiltrated into the nonwoven fabric web in the thickness direction thereof, a peel strength of 120 cN/cm or more can be more easily achieved. In this embodiment as well, it is preferable to maintain both the area ratio of the adhesive agent A from the fabric surface and the area ratio of the resin layer from the other surface at 10 to 70% in order to maintain high breathability or high air permeability.

Examples of the resin constituting the resin layer include urethane-based resins, epoxy-based resins, melamine-based resins, nylon-based resins, and the like, which are the same as the above-described adhesive agent A, and may include both one-component resins and two-component resins. Among them, polyurethane-based resins are preferable in that they can be processed easily, and a hot-melt adhesive agent containing no organic solvent can also be suitably used.

The resin constituting the resin layer may be colored by adding a pigment, may be provided with a heat retaining property improving performance derived from a radiation reflection effect of body temperature by addition of an aluminum powder, or may be provided with a heat retaining property effect due to far-infrared radiation by addition of a far-infrared radiation ceramic such as zirconia. In addition, the addition of such fine particles imparts good slippage and a dry texture to the resin layer. Furthermore, the abrasion resistance of the resin layer is also improved.

The particle size of the fine particles is preferably 5 to 200 um. When the size of the fine particles is 5 um or more, the fine particles are larger than the fiber gaps of the fiber web, so that the fine particles do not enter the inside of the nonwoven fabric web and exist only in the resin layer provided on the surface of the nonwoven fabric web. Therefore, it is possible to improve only the slippage and dry texture without affecting the peel strength. However, when the fine particles are larger than 200 $\mu$m, the touch is coarse, and the possibility of dropping off due to washing or friction increases. The composition of the fine particles is not particularly limited regardless of whether the fine particles are inorganic or organic. The shape of the fine particles is not particularly limited, but it is preferable that the fine particles have no acute-angle protrusions from the viewpoint of reducing the friction coefficient, and it is more preferable that the fine particles have a spherical shape.

The particle size referred to herein is the diameter of a portion of a particle exposed on the surface of the nonwoven fabric web, and is a value obtained by measuring the diameter in the case of a sphere or the shortest minor axis in the case of an amorphous form from a photograph taken using a scanning electron microscope.

In addition, it is preferable to add such fine particles such that the number of the fine particles present per 10 $cm^2$ in the resin layer is 10 or more, and preferably 50 or more.

Still another embodiment may be a fiber laminated structure in which a nonwoven fabric web composed of fibers having a diameter of less than 1 um is laminated on at least one surface of a woven cloth with an adhesive agent A interposed therebetween, and a non-porous film resin layer is provided on a surface of the nonwoven fabric web opposite from the surface to which the woven cloth is bonded as described above. One example is a fiber laminated structure in which at least a nonwoven fabric web composed of fibers having a diameter of less than 1 um is laminated on one surface of a woven cloth with an adhesive agent A interposed therebetween, and a non-porous film resin layer is laminated throughout on a surface of the nonwoven fabric web opposite from the surface in contact with the woven cloth. In other words, this is a laminated structure obtained by top coating or top laminating a surface of the nonwoven fabric web opposite from the woven cloth. Owing to such a configuration, the non-porous film resin layer provided on the back surface side of the fiber laminated structure can further improve waterproofness and attains high durability.

For the non-porous film resin layer, a urethane-based resin, an epoxy-based resin, a melamine-based resin, a nylon-based resin, a one-component resin, a two-component resin, or the like may be used, and various known resins can be used. A polyurethane-based resin is preferable because this can be easily processed.

The thickness of the fiber laminated structure of the present invention is preferably 0.30 mm or less, and more preferably 0.25 mm or less. When the thickness is 0.30 mm or less, both water resistance and breathability can be achieved well. The lower limit is not particularly limited, but the thickness is preferably 0.10 mm or more from the viewpoint of practical strength. In the present invention, a value measured in accordance with JIS L 1096 8.4 (2010) is used as the thickness.

In accordance with the present invention as described above, it is possible to easily obtain a fiber laminated structure having a bulkiness of a nonwoven fabric web of 1.5 to 2.5 $cm^3/g$, a breathability in accordance with the JIS L 1099-1998 A-1 method of 8000 $g/m^2 \cdot 24$ hr or more, a breathability in accordance with the JIS L 1099-1998 B-1 method of 30000 $g/m^2 \cdot 24$ hr or more, and a water resistance in accordance with the JIS L 1092-1998 hydrostatic pressure method of 80.0 kPa or more.

When the breathability by the A-1 method is 8000 $g/m^2 \cdot 24$ hr or more, a stuffy feel at the time of wearing can be eliminated. The breathability is more preferably 9000 $g/m^2 \cdot 24$ hr or more, and still more preferably 10000 $g/m^2 \cdot 24$ hr or more. A higher breathability by the A-1 method is preferable because the higher the breathability, the less the stuffy feel, but the breathability by the A-1 method is preferably 14000 $g/m^2 \cdot 24$ hr or less because a higher level of technology is required and the processing cost increases as the breathability increases.

When the breathability by the B-1 method is 30000 $g/m^2 \cdot 24$ hr or more, dew condensation is less likely to occur, and in particular, when a garment is worn at a low environmental temperature, a decrease in heat retaining property of the garment due to dew condensation can be suitably prevented. The moisture permeability by the B-1 method is more preferably 60000 $g/m^2 \cdot 24$ hr or more. A higher breathability by the B-1 method is preferable because the higher the breathability, the less the dew condensation occurs, but the breathability by the B-1 method is preferably 180000 $g/m^2 \cdot 24$ hr or less because a higher level of technology is required and the processing cost increases as the breathability increases.

When the water resistance by the hydrostatic pressure method is 80.0 kPa or more, the waterproofness is high, and water at the time of rainfall or the like is less likely to enter a garment. The water resistance is more preferably 100.0 kPa or more. Taking into consideration the fact that when the water resistance is increased, the texture is hardened, and in view of cost, the water resistance is preferably 500.0 kPa or less.

In the fiber laminated structure of the present invention having the configuration as described above, the air permeability in the JIS L 1096-1999 air permeability A method (Frajour type method) is desirably 0.1 $cm^3/cm^2 \cdot s$ or more, and more preferably 0.3 $cm^3/cm^2 \cdot s$ or more. When the air permeability is 0.1 $cm^3/cm^2 \cdot s$ or more, a garment superior in wearing comfortableness having improved moisture releasability and heat sinkability. Of the embodiments described above, the fiber laminated structures excluding those provided with top coating or top lamination (that is, those provided with a non-porous film resin layer over the entire surface) can be provided with air permeability by disposing an adhesive agent or a resin to be infiltrated into the nonwoven fabric web in a dotted form or a linear form. In addition, the fiber laminated structure in which a non-porous film resin layer is formed on the entire surface of a nonwoven fabric web has high water resistance although having no air permeability. Whether or not to laminate the non-porous film resin layer on the top may be determined depending on the intended application and desired performance. The relationship between the breathability and the water resistance and the air permeability are greatly affected by the bulkiness of the nonwoven fabric web.

Next, a preferred method for producing the fiber laminated structure of the present invention will be described, but the present invention is not limited thereto.

First, a nonwoven fabric web composed of fibers of less than 1 um is formed on release paper by an electrospinning method. The electrospinning method may be selected from a solution method and a melting method depending on the polymer to be used for the preparation. For example, in the case of polyurethane, it is common to use a solution method using dimethylformamide as a solvent, and this method can be used also in the present invention without any problem. The release paper is not particularly limited, but paper or a film coated with a silicone resin is desirable. However, the used solvent may remain on the release paper, and therefore it is preferable to use a material resistant to the solvent. By adjusting the concentration of the polyurethane solution, the injection speed (spinning speed) of the solution, the applied voltage of a spinning port, the moving speed of the release paper, and the number of superpositions, a nonwoven fabric web can be obtained on the release paper at a desired density and thickness.

After the nonwoven fabric web is formed on the release paper, the nonwoven fabric web is aged to mature in a chamber at 30 to 50°C for about 24 hours to 72 hours. Next, preferably, the release paper is peeled off, and only the nonwoven fabric web is subjected to the next winding step. At this time, the release paper does not need to be peeled off from the nonwoven fabric web, but if the nonwoven fabric web is stored for a long time with the nonwoven fabric web being formed on the release paper, the release paper becomes hard to be peeled off, and there is a high possibility that pinholes occur at the time of peeling or thickness unevenness occurs. The nonwoven fabric web preferably has a bulkiness of 1.5 to 2.5 cm$^3$/g and a thickness of 20 to 60 $\mu$m.

Thereafter, the adhesive agent A described above is applied to the woven cloth or the nonwoven fabric web. The woven cloth preferably has stretchability in at least either the warp direction or the weft direction. The adhesive agent A is preferably a hot melt resin or a solvent-based adhesive agent. In a method for applying the adhesive agent, a knife coater, a bar coater, a gravure coater, or the like can be used, and in particular, a gravure coating method using a gravure coater can relatively easily apply the adhesive agent in a dotted, linear, or lattice form and is preferable from the viewpoint of breathability or air permeability, but the application method is not limited thereto.

The bonding method may be employed with choice depending on desired properties, such as a wet lamination method or a dry lamination method, and in order to obtain an improved quality of a nonwoven fabric web, it is preferable to employ a dry lamination method involving application of the adhesive agent A to a woven cloth.

In the present invention, it is preferable to infiltrate the adhesive agent A into the nonwoven fabric web by 10% or more in the thickness direction of the nonwoven fabric web. From this point of view, it is preferable that the adhesive agent A is applied and the woven cloth and the nonwoven fabric web are superposed one on another, and then a pressure is applied to the resulting fiber laminated structure to press in the adhesive agent. Although varying depending on the resin to be used for the adhesive agent and the solvent concentration, in the case of urethane, the woven cloth and the nonwoven fabric web with the adhesive agent interposed therebetween are forced to pass through between a metal roll and a rubber roll at a temperature of 110 to 120°C to apply a line pressure of about 29.4 to 78.5 N/cm, and thereby the woven cloth and the nonwoven fabric web are press-bonded. When the linear pressure or the temperature is low, the infiltration rate into the nonwoven fabric web is low, whereas when the linear pressure or the temperature is high, strike-through of the adhesive agent occurs or the nonwoven fabric web is crushed.

The fiber laminated structure thus obtained is preferably subjected to water repellent finishing by a padding method or a kiss roller method. The water repellent finishing as referred to in the present invention is not particularly limited as long as the water repellency is improved by this treatment as compared with before the treatment, but it is preferably a treatment in which a water repellent agent is attached by attachment, infiltration, or the like. For example, a pad-drying method of immersing an item in a bath containing a water repellent agent, followed by drying. Since the nonwoven fabric web is different from a uniform non-porous film, those using a hydrophilic fiber-forming material have low water resistance. When the surface of each nanofiber in the nonwoven fabric web is hydrophobic, particularly high water resistance is obtained. The water repellent finishing is suitable for increasing the water resistance. As the water repellent agent, a known agent such as a fluorine-based water repellent agent or a silicone-based water repellent agent can be used.

Then, the adhesive agent B is applied in the same manner as the application of the adhesive agent A to the nonwoven fabric web surface of the two-layer fiber laminated structure thus obtained, and a backing is further laminated and press-bonded to afford a three-layer fiber laminated structure including the backing bonded.

Alternatively, by applying a resin in a dotted form or a linear form in the same manner as the application of the adhesive agent A to the nonwoven fabric web surface of the two-layer fiber laminated structure obtained as described above such that the resin rises on the nonwoven fabric web surface, and forming a resin layer thereby, the above-described fiber laminated structure with a dotted or linear resin layer exposed on the backing side is obtained.

Here, when an adhesive agent or a resin is applied to the nonwoven fabric web surface, the adhesive agent or the resin can be laminated in a dotted form, a linear form, or a lattice form by using a knife coater, a bar coater, a gravure coater, or the like. Also in this case, it is preferable to infiltrate the resin into the nonwoven fabric web by 10% or more in the thickness direction of the nonwoven fabric web from the viewpoint of improving the peel strength. Therefore, it is preferable to adjust the infiltration amount of the resin by appropriately adjusting the linear pressure and the temperature at the time of press-bonding. Although the degree of infiltration is increased by increasing the temperature and the linear pressure, if the viscosity of the resin is low, there is a case where the resin spreads laterally without infiltrating. Therefore, it is preferable to adjust the viscosity of the resin as well according to the degree of densely of the nonwoven fabric web.

Furthermore, by applying as a coating or laminating a non-porous resin to an entire nonwoven fabric web surface opposite from the woven cloth of the two-layer fiber laminated structure obtained as described above, a laminate structure having the above-described non-porous film resin layer with high water resistance is obtained. In the case of lamination, either a dry lamination method or a wet lamination method can be used.

EXAMPLES

Next, the present invention will be described specifically with reference to examples, but the present invention is not limited to these examples. Various measurement methods in the present invention are as follows.

(1) Elongation rate

The elongation rate was measured on the basis of JIS L 1096-2010 (B method).

(2) Breathability

The breathability was measured according to JIS L 1099-1998 Calcium Chloride Method (A-1 method) and JIS L 1099-1998 Potassium Acetate method (B-1 method). However, in both the test methods, the measurements were each converted into an amount of moisture permeated per 24 hours.

(3) Water resistance

The JIS L 1092-1998 water resistance (hydrostatic pressure method) was measured by the A Method (low water pressure method) when the water resistance was 20 kPa or less, or by B Method (high water pressure method) when the water resistance was more than 20 kPa, and the measured values were converted into the kPa unit.

(4) Water repellency

The water repellency was measured according to JIS L 1092-1998 Spray Method.

(5) Peel strength

The peel strength was measured as follows with reference to JIS L 1066 -2004 Peel Strength. The sealing tape specified below was bonded to a nonwoven fabric web surface, the sealing tape and the fiber structure were held, and then under the other conditions following the peel strength measurement method of JIS L 1066-2004, the peel strength was measured.

　　Sealing tape: SAN MELCO BW-2 (width: 2.5 cm) manufactured by Sun Chemicals, Ltd.
　　Bonding conditions: dry iron 120°C × 15 seconds (with ironing cloth).

(6) Thickness of nonwoven fabric web and degree of infiltration of adhesive agent in thickness direction (infiltration rate)

The thickness of the nonwoven fabric web and the degree of infiltration of the adhesive agent in the thickness direction were measured using a photograph taken using a scanning electron microscope (S-3400N manufactured by Hitachi High-Technologies Corporation). Specifically, the fiber laminated structure was cut in the thickness direction along each of the warp, weft, and bias directions at an arbitrary location, and photographed such that the entire nonwoven fabric web in the thickness direction was captured. Thereafter, in each of the sectional photographs along the warp, weft, and bias directions, the thickness of the fiber web and the infiltration thickness of the adhesive agent were measured at five places. The average value of the total 15 measurements in the warp, weft, and bias directions in total was defined as the thickness of the nonwoven fabric web or the infiltration thickness of the adhesive agent. The infiltration rate was calculated using the following formula.

　　•

Infiltration rate (%) = {infiltration thickness ($\mu$m) of adhesive agent / thickness ($\mu$m) of web} $\times$ 100.

(7) Bulkiness

The bulkiness of the nonwoven fabric web was calculated from the basis weight and the thickness as shown in the following formula.

·

$$\texttt{Bulkiness = (t/w) × 1000}$$

where bulkiness :cm$^3$/g
basis weight w: g/m$^2$
thickness t: mm

It is noted that the weight for calculating the basis weight was measured by adjusting the humidity for 24 hours or more in a standard state of 20°C and 65% RH. The thickness was measured by the method using a scanning electron microscope described in (6) above. Samples were taken at arbitrary five places, and the average was calculated.

(8) Quality of fiber laminated structure after washing

Three samples 45 cm long in both the warp direction and the weft direction were prepared, washed by the following method in accordance with the method of (No.) 103 of JIS L0217 (1995), and then hung and dried in a room with the warp direction of the samples being along the vertical direction. Thereafter, the state of occurrence of partial peeling was examined.

·    Washing machine : twin layer type (VH-M30 (HS) GINGA 3.0 manufactured by Toshiba Corporation was used)

Detergent : weakly alkaline synthetic detergent
Detergent concentration : 1g/L
Washing temperature : 40°C
Bath ratio :1 : 30
Washing time : 5 minutes
Rinsing : overflow of normal temperature water $\times$ 2 minutes $\times$ 2 times
Water flow : standard conditions
Process : washing - dewatering - rinsing - dewatering - rinsing - dewatering.

(9) Fiber diameter

Using a photograph taken by photographing a nonwoven fabric web surface using the scanning microscope describe above, the fiber diameter was measured using a measurement tool of the scanning microscope. The average value of the measurements at 15 places in total measured for the fibers constituting a most part of the nonwoven fabric web was taken as the fiber diameter of the polyurethane fiber.

(10) Adhesive agent application area

The application area of the adhesive agent in a 1 inch square was measured with a microscope at arbitrary ten places, and the average value thereof was taken as the adhesive agent application area.

(11) Thickness of fiber laminated structure

The thickness was measured in accordance with JIS L 1096 8.4 (2010).

[Example 1]

A round section nylon 6 yarn of 56 dtex-24 filaments was subjected to false twisting so as to be provided with stretchability. Subsequently, the textured yarn was used as a warp yarn and a weft yarn, the warp yarn was subjected to a starching treatment, and the yarns were woven with a water jet loom such that the density was 116 × 84 yarns/2.54 cm. After scouring was performed, the fabric was heat-set at 170°C for 40 seconds such that the density was made 141 × 98 yarns/2.54 cm and the cover factor was made 1789 by presetting, further dyed, dried, and finally set at 160°C. This was used as a woven cloth.

In addition, on a release paper obtained by coating a polypropylene film having a basis weight of 35 g/m$^2$ with silicone, a composite laminated web (thickness: 30 um, basis weight: 15.0 g/m$^2$, bulkiness :2.0 cm$^3$/g) in which nonwoven fabric web composed of polyurethane fibers having a single fiber diameter of 300 to 400 nm were laminated in 5 layers was prepared by an electrospinning method (solution method, solvent: dimethylformamide), followed by aging in a room at 40°C for 48 hours. Then, the release paper was peeled off, and the composite laminated web was wound up without applying tension.

Next, a moisture-curable hot-melt polyurethane resin was prepared as the adhesive agent A. The adhesive agent was heated to and dissolved at 110°C, then applied to the woven cloth with a gravure coater equipped with a gravure roll on which 0.40 mm × 0.40 mm squares (depth: 20 um) were engraved at an angle of 45° with respect to the traveling direction and at 40 meshes, and then dried at 120°C for 1 minute. As a result, the adhesive agent was applied in a dotted form to the fabric. Each of the dots was a square 0.40 mm on each side and the dots were arranged at an angle of 45° with respect to the length direction. The area ratio (coverage) of the adhesive agent A to the fabric was 40%.

Subsequently, the nonwoven fabric web obtained above was superposed, and a linear pressure of 49 N/cm was applied by making the superposed body pass between a metal roll and a rubber roll at a temperature of 110°C, followed by aging at room temperature for 48 hours. Thereafter, a 5% aqueous solution of AsahiGuard AG710 (fluorinated water repellent, manufactured by AGC Inc.) was applied by a pad-dry-cure method such that have an attachment rate was 60%, dried at 120°C for 1 minute, and then heat-treated at 170°C for 40 seconds, affording a fiber laminated structure.

In the resulting fiber laminated structure, the adhesive agent A was infiltrated 14.0 um (infiltration rate: 70%) in the thickness direction of the nonwoven fabric web, and the fiber laminated structure had superior breathable waterproof performance with an elongation rate of 15%, an A-1 method breathability of 12000 g/m$^2$·24 hours, a B-1 method breathability of 40000 g/m$^2$·24 hours, and a water resistance of 160 kPa. Further, the peel strength was 160 cN/cm in the warp direction and 220 cN/cm in the weft direction, and no partial peeling occurred in the nonwoven fabric web even after washing five times, and good appearance quality was maintained. The measured values obtained are shown in Tables 1 and 2.

[Example 2]

A composite laminated web having a thickness of 20 μm, a basis weight of 8.0 g/m$^2$, and a bulkiness of 2.5 cm$^3$/g, obtained by laminating three layers of nonwoven fabric webs in the same manner as in Example 1, was bonded to the woven cloth obtained in Example 1 and subjected to a water repellent finishing in the same manner as in Example 1, affording a fiber laminated structure. The area ratio (coverage) of the adhesive agent A to the fabric was 40%.

In the resulting fiber laminated structure, the adhesive agent A was infiltrated 10.5 um (infiltration rate: 70%) in the thickness direction of the nonwoven fabric web, and the fiber laminated structure had superior breathable waterproof performance with an A-1 method breathability of 11000 g/m$^2$·24 hours, a B-1 method breathability of 38000 g/m$^2$·24 hours, and a water resistance of 120 kPa. Further, the peel strength was 160 cN/cm in the warp direction and 210 cN/cm in the weft direction, and no partial peeling occurred in the nonwoven fabric web even after washing five times, and good appearance quality was maintained. The measured values obtained are shown in Tables 1 and 2.

[Example 3]

The adhesive agent used in Example 1 was applied as the adhesive agent B to the nonwoven fabric web surface of the fiber laminated structure obtained in Example 1 with the same gravure coater as in Example 1, and dried at 120°C for 1 minute. As a result, the adhesive agent B was applied in a dotted form to the nonwoven fabric web. Each of the dots was a 0.40 mm square and the dots were arranged at an angle of 45° with respect to the length direction. The area ratio (coverage) of the adhesive agent B to the nonwoven fabric web was 40%.

Separately, a single tricot using a round section nylon 6•6 semi-dull yarn of 33 dtex-24 filaments was dyed and finished at 29 wells/2.54 cm and 46 courses/2.54 cm. The sinker loop surface of the tricot was superposed on the nonwoven fabric web surface to which the adhesive agent was applied, and a linear pressure of 49 N/cm was applied by making the superposed body pass between a metal roll and a rubber roll at a temperature of 110°C in the same manner as in Example 1, followed by aging at room temperature for 48 hours.

In the resulting three-layer fiber laminated structure, the adhesive agent B was infiltrated 10.0 um from the backing surface (infiltration rate: 67%) in the thickness direction of the nonwoven fabric web, and the fiber laminated structure had superior breathable waterproof performance with an A-1 method breathability of 13000 g/m$^2$·24 hours, a B-1 method breathability of 41000 g/m$^2$·24 hours, and a water resistance of 130 kPa. Further, the peel strength was 230 cN/cm in the warp direction and 220 cN/cm in the weft direction, and no peeling of the backing occurred even after washing five times, and good appearance quality was maintained. The measured values obtained are shown in Tables 1 and 2.

[Example 4]

The nonwoven fabric web surface of the fiber laminated structure before the water repellent finishing of Example 1 was coated with the coating liquid described below by a roll-on-knife method at a clearance of 0.05 mm and an application amount of 30 g/m$^2$, dried at 130°C for 3 minutes, and then cured at 165°C for 2 minutes, and thus a non-porous film resin layer was laminated. Thereafter, a 5% aqueous solution of AsahiGuard AG710 (fluorinated water repellent, manufactured by AGC Inc.) was applied in the same manner as in Example 1 such that have an attachment rate was 60%, dried at 120°C for 1 minute, heat-treated at 170°C for 40 seconds, and then aged at room temperature for 48 hours.

In the resulting fiber laminated structure, a non-porous film resin layer was bonded 3.0 um (bonding rate: 20%) in the thickness direction of the nonwoven fabric web, and the fiber laminated structure had superior breathable waterproof performance with an A-1 method breathability of 8000 g/m$^2\cdot$24 hours, a B-1 method breathability of 30000 g/m$^2\cdot$24 hours, and a water resistance of 200 kPa. The peel strength measured by bonding the sealing tape to the non-porous film resin layer was 230 cN/cm in the longitudinal direction and 200 cN/cm in the transverse direction, and no partial peeling occurred even after washing five times, and good appearance quality was maintained. The measured values obtained are shown in Tables 1 and 2.

(Coating liquid)

A coating liquid was prepared by adding (a) 42.1 wt% of a self-emulsifying polyurethane having an average particle size of 65 nm synthesized using hydrogenated methylene diisocyanate as a polyisocyanate component, polytetramethylene glycol having a number average molecular weight of 2000 as a glycol component, and 2,2-bishydroxymethylbutanoic acid as an internal emulsifier, (b) 42.1 wt% of a self-emulsifying polyurethane having an average particle size of 45 nm synthesized using hydrogenated methylene diisocyanate as a polyisocyanate component, polyethylene glycol having a number average molecular weight of 1000 as a glycol component, and 2,2-bishydroxymethylpropionic acid as an internal emulsifier, (c) 2 wt% of "BECKAMINE M-3" (trade name, manufactured by DIC Corporation) as a melamine-based crosslinking agent having a methylol group as a terminal functional group as a crosslinking agent, (d) 5.6 wt% of "BN-69" (trade name, manufactured by DKS Co., Ltd.) as a blocked isocyanatebased crosslinking agent having an isocyanate group at a reactive terminal, and further (d) porous silica having an average particle size of 2.7 um as a matting agent in an amount of 10 wt% based on the solid content of the blend resin, stirring the mixture with a mixer, and defoaming.

[Example 5]

A fiber laminated structure was obtained and evaluated in the same manner as in Example 1 except that the following points were changed. Specifically, a polyester side-by-side composite yarn of 56 dtex-48 filaments differing in intrinsic viscosity was subjected to false twisting. Subsequently, the textured yarn was used as a warp yarn and a weft yarn, the warp yarn was subjected to a starching treatment, and the yarns were woven with a water jet loom such that the density was 118 × 90 yarns/2.54 cm. After scouring was performed, the fabric was heat-set at 170°C for 40 seconds such that the density was made 139 × 140 yarns/2.54 cm and the cover factor was made 2087 by presetting, further dyed, dried, and finally set at 160°C. A fiber laminated structure was obtained in the same manner as in Example 1 except that this was used as a woven cloth. The area ratio (coverage) of the adhesive agent A to the fabric was 40%.

In the resulting fiber laminated structure, the adhesive agent A was infiltrated 14.0 um (infiltration rate: 70%) in the thickness direction of the nonwoven fabric web, and the fiber laminated structure had superior breathable waterproof performance with an elongation rate of 25%, an A-1 method breathability of 10000 g/m$^2\cdot$24 hours, a B-1 method breath-ability of 32000 g/m$^2\cdot$24 hours, and a water resistance of 150 kPa. Further, the peel strength was 200 cN/cm in the warp direction and 220 cN/cm in the weft direction, and no partial peeling occurred in the nonwoven fabric web even after washing five times, and good appearance quality was maintained. The measured values obtained are shown in Tables 1 and 2.

[Example 6]

A composite laminated web having a thickness of 20 um, a basis weight of 8.0 g/m$^2$, and a bulkiness of 2.5 cm$^3$/g, obtained by laminating three layers of nonwoven fabric webs in the same manner as in Example 1, was bonded to the woven cloth obtained in Example 5 and subjected to a water repellent finishing in the same manner as in Example 1, affording a fiber laminated structure. The area ratio (coverage) of the adhesive agent A to the fabric was 40%.

In the resulting fiber laminated structure, the adhesive agent A was infiltrated 10.5 um (infiltration rate: 70%) in the thickness direction of the nonwoven fabric web, and the fiber laminated structure had superior breathable waterproof performance with an A-1 method breathability of 12000 $g/m^2 \cdot 24$ hours, a B-1 method breathability of 38000 $g/m^2 \cdot 24$ hours, and a water resistance of 120 kPa. Further, the peel strength was 160 cN/cm in the warp direction and 210 cN/cm in the weft direction, and no partial peeling occurred in the nonwoven fabric web even after washing five times, and good appearance quality was maintained. The measured values obtained are shown in Tables 1 and 2.

[Comparative Example 1]

As the adhesive agent A, an adhesive agent was prepared that was composed of a solution prepared by dissolving a polyether-based polyurethane resin using 4,4'-methylene bis(cyclohexylisocyanate) as an isocyanate and containing polyethylene glycol as a soft segment in a mixed solvent of methyl ethyl ketone, toluene, and isopropyl alcohol (1 : 1 : 0.5) to achieve a concentration of 23% by weight, and a hexamethylene diisocyanate trimer with a cyanuric skeleton as a crosslinking agent added in an amount of 6 parts based on the weight of that solution. A fiber laminated structure was obtained in the same manner as in Example 1 except that this adhesive agent solution was applied in the same form as in Example 1 with a gravure coater, a linear pressure of 19.6 N/cm was applied with a press-bonding machine including only a rubber roll, and the adhesive agent solution was infiltrated 1.0 um (infiltration rate: 7%) in the thickness direction of the nonwoven fabric web. The area ratio (coverage) of the adhesive agent A to the fabric was 40%.

The peel strength of the obtained fiber laminated structure was 70 cN/cm in the warp direction and 60 cN/cm in the weft direction, partial peeling occurred in the nonwoven fabric web after washing five times, and the quality after the washing was poor. The measured values obtained are shown in Tables 1 and 2.

[Comparative Example 2]

A fiber laminated structure was obtained and evaluated in the same manner as in Example 2 except that the following points were changed. Specifically, a fiber laminated structure was obtained in the same manner as in Example 2 except that the same adhesive agent solution as that used in Comparative Example 1 was used as the adhesive agent A and was applied in the same form as in Example 2 with a gravure coater, a linear pressure of 19.6 N/cm was applied with a press-bonding machine including only a rubber roll, and the adhesive agent solution was infiltrated 1.0 um (infiltration rate: 7%) in the thickness direction of the nonwoven fabric web. The area ratio (coverage) of the adhesive agent A to the fabric was 40%.

The peel strength of the obtained fiber laminated structure was 70 cN/cm in the warp direction and 60 cN/cm in the weft direction, partial peeling occurred in the nonwoven fabric web after washing five times, and the quality after the washing was poor. The measured values obtained are shown in Tables 1 and 2.

[Comparative Example 3]

A fiber laminated structure was obtained and evaluated in the same manner as in Example 1 except that the following points were changed. Specifically, the nonwoven fabric web composed of polyurethane fibers was composed of one layer, the thickness was changed to 10 um, the basis weight was changed to 3.0 g/m2, and the bulkiness was changed to 3.3 $cm^3/g$. In addition, the same adhesive agent solution as that used in Comparative Example 1 was used as the adhesive agent A and was applied in the same form as in Example 1 with a gravure coater, a linear pressure of 19.6 N/cm was applied with a press-bonding machine including only a rubber roll, and the adhesive agent A was infiltrated 0.025 um (infiltration rate: 5%) in the thickness direction of the nonwoven fabric web. A fiber laminated structure was obtained and evaluated in the same manner as in Example 1 except for these points. The area ratio (coverage) of the adhesive agent A to the fabric was 40%.

The peel strength of the obtained fiber laminated structure was 40 cN/cm in the warp direction and 30 cN/cm in the weft direction, and the fiber laminated structure was not usable for clothing or clothing materials because of its rough and hard texture. In addition, partial peeling occurred in the nonwoven fabric web after washing five times, and the appearance quality became poor. The measured values obtained are shown in Tables 1 and 2.

[Comparative Example 4]

A fiber laminated structure was obtained and evaluated in the same manner as in Comparative Example 3 except that the following points were changed. Specifically, the nonwoven fabric web was changed to the same nonwoven fabric web as in Example 1. In addition, the same adhesive agent solution as that used in Comparative Example 1 was used as the adhesive agent A and was applied in the same form as in Example 1 with a gravure coater, a linear pressure of 19.6 N/cm was applied with a press-bonding machine including only a rubber roll, and the adhesive agent A was infiltrated 1.2 um (infiltration rate: 8%) in the thickness direction of the nonwoven fabric web. A fiber laminated structure was obtained in the same manner as in Example 1 except for these points. The area ratio (coverage) of the adhesive agent A to the fabric was 40%.

The peel strength of the obtained fiber laminated structure was 85 cN/cm in the warp direction and 60 cN/cm in the weft direction, the water resistance was low, partial peeling occurred in the nonwoven fabric web after washing five times, and the appearance quality was poor. The measured values obtained are shown in Tables 1 and 2.

[Comparative Example 5]

A fiber laminated structure was obtained and evaluated in the same manner as in Example 1 except that the following points were changed. Specifically, the same nonwoven fabric web as in Example 1 was bonded by the same method to the woven cloth obtained in Example 1, and a fiber laminated structure was obtained without performing water repellent finishing. The area ratio (coverage) of the adhesive agent A to the fabric was 40%. The infiltration rate was 70%.

The obtained fiber laminated structure had a water repellency as low as grade 1 and a water resistance as low as 10 kPa, and thus did not have waterproof performance. The measured values obtained are shown in Tables 1 and 2.

[Example 7]

A fiber laminated structure was obtained and evaluated in the same manner as in Example 1 except that the following points were changed. Specifically, a 56 dtex-40 filaments round section nylon 6 yarn was used as a warp yarn and a weft yarn, the warp yarn was subjected to a starching treatment, and the yarns were woven with a water jet loom such that the density was 177 × 105 yarns/2.54 cm. After scouring was performed, the fabric was heat-set at 170°C for 40 seconds such that the density was made 186 × 106 yarns/2.54 cm and the cover factor was made 2110 by presetting, further dyed, dried, and finally set at 160°C. A fiber laminated structure was obtained in the same manner as in Example 1 except that this was used as a woven cloth. The area ratio (coverage) of the adhesive agent A to the fabric was 40%. The infiltration rate was 70%.

The obtained fiber laminated structure had an elongation rate of 3%, an A-1 method breathability of 7500 g/m$^2$·24 hours, and a B-1 method breathability of 28000 g/m$^2$·24 hours, and was poor in stretchability. The measured values obtained are shown in Tables 1 and 2.

[Table 1]

| | CF | Number of nonwoven fabric web layers laminated | Bulkiness of nonwoven fabric web cm$^3$/g | Thickness of nonwoven fabric web μm | Thickness of fiber laminated structure mm | Infiltration depth (infiltration rate) of adhesive agent A % | Application area (area ratio) of adhesive agent A % |
|---|---|---|---|---|---|---|---|
| Example 1 | 1789 | 5 | 2.0 | 30 | 0.25 | 70 | 40 |
| Example 2 | 1789 | 3 | 2.5 | 20 | 0.22 | 70 | 40 |
| Example 3 | 1789 | 5 | 2.0 | 30 | 0.30 | 70 | 40 |
| Example 4 | 1789 | 5 | 2.0 | 30 | 0.28 | 70 | 40 |
| Example 5 | 2087 | 5 | 2.0 | 30 | 0.25 | 70 | 40 |
| Example 6 | 2087 | 3 | 2.5 | 20 | 0.22 | 70 | 40 |
| Comparative Example 1 | 1789 | 5 | 2.0 | 30 | 0.25 | 7 | 40 |
| Comparative Example 2 | 1789 | 3 | 2.0 | 20 | 0.25 | 7 | 40 |
| Comparative Example 3 | 1789 | 1 | 3.3 | 10 | 0.21 | 5 | 40 |

(continued)

|  | CF | Number of nonwoven fabric web layers laminated | Bulkiness of nonwoven fabric web cm³/g | Thickness of nonwoven fabric web μm | Thickness of fiber laminated structure mm | Infiltration depth (infiltration rate) of adhesive agent A % | Application area (area ratio) of adhesive agent A % |
|---|---|---|---|---|---|---|---|
| Comparative Example 4 | 1789 | 5 | 2.0 | 20 | 0.34 | 8 | 40 |
| Comparative Example 5 | 1789 | 5 | 2.0 | 30 | 0.25 | 70 | 40 |
| Example 7 | 2110 | 5 | 2.0 | 30 | 0.25 | 70 | 40 |

[Table 2]

|  | Elongation rate % | Breathability (g/m²·24 hours) | | Water resistance (kPa) | Water repellency (Grade) | Peel strength (cN/cm) | | Quality after washing five times |
|---|---|---|---|---|---|---|---|---|
|  |  | A-1 Method | B-1 Method |  |  | Warp | Weft |  |
| Example 1 | 15 | 12000 | 40000 | 160 | 5 | 160 | 220 | Good |
| Example 2 | 20 | 11000 | 38000 | 120 | 5 | 160 | 210 | Good |
| Example 3 | 15 | 13000 | 41000 | 130 | 5 | 230 | 220 | Good |
| Example 4 | 15 | 8000 | 30000 | 200 | 5 | 230 | 200 | Good |
| Example 5 | 25 | 10000 | 32000 | 150 | 5 | 200 | 220 | Good |
| Example 6 | 25 | 12000 | 38000 | 120 | 5 | 160 | 210 | Good |
| Comparative Example 1 | 15 | 10000 | 22000 | 60 | 5 | 70 | 60 | Partial peeling |
| Comparative Example 2 | 20 | 8900 | 20000 | 90 | 5 | 70 | 60 | Partial peeling |
| Comparative Example 3 | 25 | 4000 | 12000 | 120 | 5 | 40 | 30 | Partial peeling |
| Comparative Example 4 | 15 | 11000 | 25000 | 8 | 5 | 85 | 60 | Partial peeling |
| Comparative Example 5 | 15 | 12000 | 40000 | 10 | 1 | 160 | 210 | Good |
| Example 7 | 3 | 7500 | 28000 | 130 | 5 | 160 | 200 | Good |

INDUSTRIAL APPLICABILITY

Since the fiber laminated structure of the present invention has high breathability and waterproofness and is superior in durability, the fiber laminated structure of the present invention can be suitably used in the clothing field including outdoor wear such as fishing and mountain climbing wear, ski/snowboard wear, window breaker, athletic wear, golf wear, tennis wear, rainwear, casual wear, work wear, gloves and shoes, the clothing material field including globe inserts and boot inserts, and the nonclothing field including building materials such as wallpapers and roof waterproofing sheets.

**Claims**

1. A water-repellent fiber laminated structure in which a nonwoven fabric web with a bulkiness of 1.5 to 2.5 cm$^3$/g and a thickness of 20 to 60 um comprising a fiber made of a polyurethane-based polymer having a fiber diameter of less than 1 um is present on one side of a woven cloth having stretchability at least in either a warp direction or a weft direction with an adhesive agent A interposed therebetween.

2. The fiber laminated structure according to claim 1, wherein an elongation rate of the fiber laminated structure is 5% or more.

3. The fiber laminated structure according to claim 1 or 2, wherein the nonwoven fabric web is a composite laminated web formed of a laminate including three or more layers.

4. The fiber laminated structure according to claim 1 or 2, wherein the adhesive agent A is infiltrated into the nonwoven fabric web by 10% or more and 90% or less in a thickness direction of the nonwoven fabric web, and a peel strength between the woven cloth and the nonwoven fabric web is 120 cN/cm or more.

5. The fiber laminated structure according to claim 1 or 2, wherein the fiber laminated structure has a water resistance in accordance with the hydrostatic pressure method of JIS L 1092-1998 of 80 kPa or more.

6. The fiber laminated structure according to claim 1 or 2, wherein the fiber laminated structure has a breathability in accordance with JIS L 1099-1998 A-1 method of 8000 g/m$^2$·24 hours or more.

7. The fiber laminated structure according to claim 1 or 2, wherein a total fineness of fibers used in the woven cloth is 65 dtex or less, and a cover factor of the woven cloth is 2100 or less,

   •

   $$CF = \{(D1)^{1/2} \times M\} + \{(D2)^{1/2} \times N\}$$

   where CF: cover factor,
   D1: fineness (dtex) of warp yarn,
   M: warp yarn density (yarns/2.54 cm),
   D2: fineness (dtex) of weft yarn,
   N: weft yarn density (yarns/2.54 cm).

8. The fiber laminated structure according to claim 1 or 2, wherein the adhesive agent A is present in a dotted, linear, or lattice form at a ratio of 70% or less in terms of an adhesive agent application area on a surface of the nonwoven fabric web.

9. The fiber laminated structure according to claim 1 or 2, wherein the fiber laminated structure has a thickness of 0.30 mm or less.

10. The fiber laminated structure according to claim 1 or 2, wherein the fiber laminated structure has a breathability in accordance with JIS L 1099-1998 B-1 method of 30,000 g/m$^2$·24 hours or more.

11. The fiber laminated structure according to claim 1 or 2, further comprising a backing having stretchability in either or both of the warp direction and the weft direction on a surface of the nonwoven fabric web opposite from the surface in contact with the woven cloth, wherein an adhesive agent B is present between the nonwoven fabric web and the backing.

12. The fiber laminated structure according to claim 11, wherein the adhesive agent B is present in a dotted, linear, or lattice form, and infiltrated into the nonwoven fabric web by 10% or more in a thickness direction of the nonwoven fabric web.

13. The fiber laminated structure according to claim 1 or 2, further comprising a resin layer or a non-porous film resin layer on a surface of the nonwoven fabric web opposite from the surface in contact with the woven cloth.

**14.** A method for producing a fiber laminated structure, comprising bonding a woven cloth having stretchability at least in either a warp direction or a weft direction to a nonwoven fabric web with a bulkiness of 1.5 to 2.5 cm$^3$/g and a thickness of 20 to 60 um comprising a polyurethane-based polymer having a fiber diameter of less than 1 um with an adhesive agent A, and then subjecting the bonded body to water repellent finishing.

**15.** The method for producing a fiber laminated structure according to claim 14, wherein the adhesive agent A is a hot melt resin or a solvent-based adhesive agent, and a method of applying the adhesive agent A to a surface of the nonwoven fabric web or to the woven cloth is a gravure coating method.

## INTERNATIONAL SEARCH REPORT

| International application No. |
|---|
| **PCT/JP2022/030364** |

**A.      CLASSIFICATION OF SUBJECT MATTER**

*B32B 5/26*(2006.01)i; *D06M 17/00*(2006.01)i
FI:    B32B5/26; D06M17/00 H

According to International Patent Classification (IPC) or to both national classification and IPC

**B.      FIELDS SEARCHED**

Minimum documentation searched (classification system followed by classification symbols)

B32B1/00-43/00; D06M17/00-17/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
|---|---|---|
| Y | JP 2010-30289 A (TORAY IND INC) 12 February 2010 (2010-02-12) claims, paragraphs [0020], [0025], [0026], [0030], [0032], [0044], [0055]-[0057], [0060], [0115], examples | 1-15 |
| Y | JP 61-56356 B2 (KANEBO LTD) 02 December 1986 (1986-12-02) waterproof fabric no. 10 | 1-15 |
| Y | JP 3-18486 Y2 (KANEBO TEXTILE KK) 18 April 1991 (1991-04-18) claims, column 2, lines 10-14, column 2, line 24 to column 3, line 17 | 1-15 |
| Y | JP 61-222732 A (TOYO BOSEKI) 03 October 1986 (1986-10-03) claims, examples | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 September 2022** | **13 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/030364**

| Patent document cited in search report | | | Publication date (day/month/year) | Patent family member(s) | | | Publication date (day/month/year) |
|---|---|---|---|---|---|---|---|
| JP | 2010-30289 | A | 12 February 2010 | WO | 2009/157400 | A1 | |
| JP | 61-56356 | B2 | 02 December 1986 | EP | 104049 | A2 | |
| | | | | waterproof fabric no. 47 | | | |
| | | | | JP | 59-53786 | A | |
| | | | | US | 4539255 | A | |
| | | | | CA | 1210684 | A | |
| | | | | AU | 1908683 | A | |
| JP | 3-18486 | Y2 | 18 April 1991 | JP | 61-159319 | U | |
| JP | 61-222732 | A | 03 October 1986 | (Family: none) | | | |

Form PCT/ISA/210 (patent family annex) (January 2015)

**EP 4 406 735 A1**

## REFERENCES CITED IN THE DESCRIPTION

**Patent documents cited in the description**

- JP S5626076 A
- JP H079631 A
- JP S5118991 B
- JP 2010030289 A